# EUROPEAN PATENT APPLICATION

(11) **EP 1 914 591 A1**
(43) Date of publication of application: **23.04.2008**
(21) Application number: 07019254.7
(22) Date of filing: 01.10.2007
(51) Int. Cl.: G02F 1/1347, G02B 27/22, G02F 1/139

(54) **Display device for three-dimensional image**

(30) Priority: 20.10.2006 KR 20060102487
(71) Applicant: Samsung Electronics Co., Ltd., Yeongtong-gu Suwon-city, Gyeonggi-do 442-742 (KR)
(72) Inventor: Ko, Kyung-jin, Seoul (KR)
(74) Representative: Dr. Weitzel & Partner

(57) **Abstract**

A display device (10) for three-dimensional images includes a first panel (100) including first and second substrates where first and second alignment films are formed, respectively, and a first liquid crystal layer interposed between the first and second substrates, a second panel (200) including third and fourth substrates where third and fourth alignment films are formed, respectively, and a second liquid crystal layer interposed between the third and fourth substrates, and disposed to overlap the first panel, first and second polarizing plates disposed at the outsides of the first and second panels, respectively, and a third polarizing plate disposed between the first and second panels. A polarizing axis of the third polarizing plate substantially aligns with rubbing directions of the second and third alignment films that are disposed adjacent to the third polarizing plate.

## Description

### BACKGROUND OF THE INVENTION

### 1. Field of the Invention

The present disclosure is directed to a display device for three-dimensional images. More particularly, the present disclosure is directed to a display device for three-dimensional images that is capable of producing high transmittance.

### 2. Description of the Related Art

Various methods have been researched or developed for a technology implementing living and realistic three-dimensional images. In particular, with the development of information communication technologies including the Internet and mobile communication, an amount and quality of information that are transmitted to individuals have drastically increased. A three-dimensional display technology has been of interest as a method of most efficiently transmitting and representing information.

Three-dimensional display technology may be largely divided into a stereoscopy type, where viewers need to put on special glasses in order to view three-dimensional images, and an autostereoscopy type, where the viewers can view the three-dimensional images without putting on the special glasses.

The stereoscopy-type three-dimensional display provides slightly different images to the left and right eyes of each viewer, respectively, such that the viewer perceives depth cues due to parallax thereof. The stereoscopy type is divided into a liquid crystal shutter type and a polarized stereoscopy type.

In an autostereoscopy-type three-dimensional display, there is a parallax method, a volumetric method, and a holographic method. In the parallax method, a lenticular sheet or a parallax barrier that is a lens array of a cylindrical type is provided in front of a display panel, such that different images are viewed through the left and right eyes of a viewer, respectively. In the volumetric method, a three-dimensional image is actually formed on a space, and in the holographic method, a wave front of a three-dimensional object is reproduced.

In the autostereoscopy-type three-dimensional display, when a plurality of transmissive display panels overlap to implement depth cues, transmittance may be lowered due to a display panel. In particular, when a liquid crystal panel is used as the display panel, a polarizing plate that is attached to each liquid crystal panel may offset light, which lowers the total transmittance of a display device.

### SUMMARY OF THE INVENTION

According to an exemplary embodiment of the present invention, a display device for three-dimensional images includes a first panel including first and second substrates where first and second alignment films are formed, respectively, and a first liquid crystal layer interposed between the first and second substrates, a second panel including third and fourth substrates where third and fourth alignment films are formed, respectively, and a second liquid crystal layer interposed between the third and fourth substrates, and disposed to overlap the first panel, first and second polarizing plates disposed at the outsides of the first and second panels, respectively, and a third polarizing plate disposed between the first and second panels. In this case, a polarizing axis of the third polarizing plate substantially aligns with rubbing directions of the second and third alignment films that are disposed adjacent to the third polarizing plate.

According to another exemplary embodiment of the present invention, a display device for three-dimensional images includes a first panel including first and second substrates and a first liquid crystal layer interposed between the first and second substrates, a second panel including third and fourth substrates and a second liquid crystal layer interposed between the third and fourth substrates, and disposed to overlap the first panel, and first and second polarizing plates disposed at the outsides of the first and second panels, respectively. In this case, the first and the second crystal layers have chiral dopants that have different polarities, respectively, and polarizing axes of the first and second polarizing plates align with each other.

### BRIEF DESCRIPTION OF THE DRAWINGS

The above and other features will become more apparent by describing in detail exemplary embodiments thereof with reference to the attached drawings.

FIG. 1 is a schematic perspective view of a three-dimensional image display device according to an exemplary embodiment of the present invention.

FIG. 2 is a cross-sectional view of a three-dimensional image display device of FIG. 1.

FIG. 3 is an exploded perspective view of a three-dimensional image display device of FIG. 2.

FIG. 4 is a diagram illustrating movement of liquid crystal molecules in each panel of FIG. 3.

FIG. 5 is a cross-sectional view of a three-dimensional image display device according to another exemplary embodiment of the present invention.

FIG. 6 is an exploded perspective view of a three-dimensional image display device of FIG. 5.

FIG. 7 is an exploded perspective view of a three-dimensional image display device according to still another exemplary embodiment of the present invention.

FIG. 8 is a diagram illustrating movement of liquid crystal molecules in each panel of FIG. 7.

### DETAILED DESCRIPTION OF EXEMPLARY EMBODIMENTS

Features methods of accomplishing the same may be understood more readily by reference to the following detailed description of exemplary embodiments and the accompanying drawings. The invention may, however, be embodied in many different forms and should not be construed as being limited to the embodiments set forth herein. It will be understood that when an element or layer is referred to as being "on", "connected to" or "coupled to" another element or layer, it can be directly on, connected or coupled to the other element or layer or intervening elements or layers may be present.

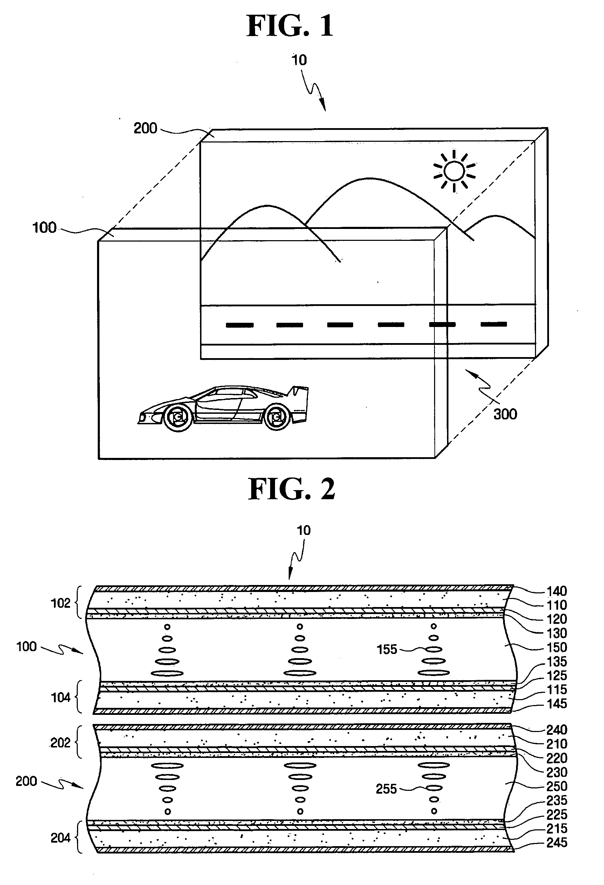

FIG. 1 is a schematic perspective view of a three-dimensional image display device according to an exemplary embodiment of the present invention, and FIG. 2 is a cross-sectional view of a three-dimensional image display device of FIG. 1.

Referring to FIG. 1, a three-dimensional image display device 10 according to an exemplary embodiment of the present invention includes a first panel 100, and a second panel 200 that is disposed to overlap the first panel 100.

The first panel 100 and the second panel 200 display images different from each other, respectively. Since a viewer views an image displayed on the first panel 100 and an image displayed on the second panel 200 in an overlapping state, the viewer recognizes a three-dimensional image as a whole. Further, the viewer may recognize the image displayed on the first panel 100 to be disposed adjacent to the viewer as an image that is relatively closely disposed to the viewer.

A refractor may be additionally disposed in a space 300 between the first panel 100 and the second panel 200. The image on the second panel 200 is refracted at a predetermined angle while passing through the refractor, and is then recognized by the viewer through the first panel 100. Accordingly, the viewer can further feel a three-dimensional effect. In order to minimize distortion in the image on the second panel 200, the refractor may be formed of a sheet of a material, such as a glass material, an acrylic material, or the like, which is optically transparent. Further, the refractor may be formed of a Fresnel lens, a lenticular lens, or the like.

Referring to FIG. 2, the first panel 100 includes an upper substrate 102, a lower substrate 104, and a liquid crystal layer 150 that is interposed therebetween.

The lower substrate 104 is a substrate that includes a plurality of thin-film transistor arrays and a plurality of pixel electrodes 125 formed on an insulating substrate 115 made of a transparent material. In this case, the lower substrate 104 includes signal lines, such as gate lines, data lines, and the like. In the lower substrate 104, a thin film transistor (not shown) and a pixel electrode 125 are formed in each pixel region that is defined by crossing each gate line and each data line. Each of the thin film transistors is formed by using a gate electrode, a source electrode, and a drain electrode that are formed on the insulating substrate 115. The thin film transistor switches an image signal transmitted through the data line according to a scanning signal transmitted through the gate line such that the image signal is applied to or intercepted from the pixel electrode 125.

In this case, the first panel 100 is divided into a transmissive display panel, a reflective display panel, and a transflective display panel according to a type of the pixel electrode 125. The display panel of any one of the three types may also be applied to the three-dimensional image display device 10 according to the embodiment of the present invention. In this embodiment, the description is made with respect to the transmissive display panel.

The pixel electrode 125 is made of a transparent conductive material, such as ITO (Indium Tin Oxide) or IZO (Indium Zinc Oxide).

An alignment film 135 is laminated on the pixel electrode 125. The alignment film 135 may be made of a polyimide-series organic thin film or an inorganic thin film including silicon. In this case, examples of a material of the inorganic thin film may include hydrogenated amorphous silicon, silicon carbide (SiC), silicon oxide (SiOₓ), silicon nitride (Si₃N₄), or the like. For convenience of description, the alignment film 135 that is made of the organic thin film is used in this invention.

After the alignment film 135 is coated on the insulating substrate 115, a rubbing process, which rubs the alignment film 135 using soft cloth in a predetermined direction, is performed on the alignment film 135. The rubbing process is performed such that the alignment film 135 is rubbed in one direction by using cloth where a fiber, such as cotton or nylon, is flocked and thus liquid crystal molecules are aligned on a surface of the alignment film 135 in a predetermined direction.

The upper substrate 102 is opposite to the lower substrate 104 at a predetermined interval. The upper substrate 102 is a substrate where a black matrix (not shown), color filters (not shown), and a common electrode 120 are provided on the insulating substrate 110 made of a transparent material.

Specifically, color filters of red, green, and blue are provided on the insulating substrate 110. In addition, the black matrix is formed at a location that is opposite to the thin-film transistor array, and serves to absorb diffused reflected light. The color filters of red, green, and blue are sequentially formed in the respective pixels.

The common electrode 120 with a uniform thickness is formed on the color filters. In this case, the common electrode 120 may be made of a transparent conductive material, such as ITO or IZO.

In addition, an alignment film 130 is laminated on the common electrode 120. The liquid crystal molecules in the liquid crystal layer 150 that is interposed between the upper substrate 102 and the lower substrate 104 are aligned in a predetermined direction by the alignment films 130 and 135 that are respectively formed on the upper substrate 102 and the lower substrate 104. Further, the liquid crystal molecules in the liquid crystal layer 150 may be pretilted at a predetermined angle.

According to an aligned state of the liquid crystal molecules 155 in the liquid crystal layer 150, a TN (Twisted Nematic) mode, an ECB (Electrically Controlled Birefringence) mode, and a VA (Vertically Aligned) mode may be applied. However, this embodiment will be described by using the first panel 100 that operates in the TN mode, in which an opening ratio is high, in order to ensure maximum transmittance.

The liquid crystal molecules 155 that are included in the liquid crystal layer 150 may be aligned such that a major axis of the liquid crystal molecule is parallel to the lower substrate 104 and the upper substrate 102, in a state where an electric field is not generated between the pixel electrode 125 and the common electrode 120. If a voltage is applied to the common electrode 120 and the pixel electrode 125, an electric field is generated in the liquid crystal layer 150, and thus the liquid crystal molecules rotate. At this time, when the liquid crystal molecules that are included in the liquid crystal layer 150 have positive dielectric anisotropy, the liquid crystal molecules 155 rotate in a direction parallel to a direction where the electric field is oriented. Further, the liquid crystal layer 150 is made of a liquid crystal mixture where a chiral dopant is added to nematic liquid crystal molecules to be rotatable.

Polarizing plates 140 and 145 are disposed on both sides of the first panel 100, respectively. The polarizing plates 140 and 145 selectively transmits linearly polarized light in a polarization axis (or transmission axis) direction from disordered light that is not polarized. The polarizing plate 140 has a structure in which a polarization film is laminated on a support film. For the polarization film, poly vinyl alcohol (PVA), polycarbonate, polystyrene, polymethacrylate, or the like may be used. In addition, the support film that is attached to the polarization film improves durability, mechanical strength, thermal resistance, and the like, and can use tri-acetyl cellulose (TAC), polyethylene terephthalate, polyethylene glycol, polymethyl methacrylate, polycarbonate, or the like.

Next, the second panel 200 that is opposite to the first panel 100 will be described in detail. The second panel 200 has substantially the same structure as the first panel 100. That is, the second panel 200 includes an upper substrate 202, a lower substrate 204, and a liquid crystal layer 250 that is interposed therebetween.

A polarizing plate 240, an insulating substrate 210, a common electrode 220, and an alignment film 230 that form the upper substrate 202 of the second panel 200 are substantially the same as the polarizing plate 140, the insulating substrate 110, the common electrode 120, and the alignment film 130 of the upper substrate 102 of the first panel 100. However, a rubbing direction of the alignment film 230 that forms the second panel 200 does not align with the rubbing direction of the alignment film 130 that forms the first panel 100. Further, the polarizing plate 240 of the second panel 200 is different from the polarizing plate 140 of the first panel 100 in a direction of a polarizing axis.

A polarizing plate 245, an insulating substrate 215, a pixel electrode 225, and an alignment film 235 that form the lower substrate 204 of the second panel 200 are substantially the same as the polarizing plate 145, the insulating substrate 115, the pixel electrode 125, and the alignment film 135 of the lower substrate 104 of the first panel 100. However, a rubbing direction of the alignment film 235 that forms the second panel 200 does not align with the rubbing direction of the alignment film 135 that forms the first panel 100. Further, the polarizing plate 245 of the second panel 200 is different from the polarizing plate 145 of the first panel 100 in a direction of a polarizing axis.

In the three-dimensional display device 10 that includes the first panel 100 and the second panel 200, color filters may be formed on both the upper substrate 102 of the first panel 100 and the upper substrate 202 of the second panel 200. However, embodiments of the present invention are not limited thereto. The color filter may be formed only on the first panel 100 that is disposed relatively closer to the viewer than the second panel 200, and not on the second panel 200. Accordingly, transmittance of light can be increased by reducing the amount of light absorbed in the color filter. In other cases, the color filter may be formed only on the second panel 200, and not on the first panel 100.

The liquid crystal layer 250 of the second panel 220 has substantially the same structure as the liquid crystal layer 150 of the first panel 100. However, a chiral dopant that is included in the liquid crystal layer 250 of the second panel 200 has a polarity opposite to that of the chiral dopant that is included in the liquid crystal layer 150 of the first panel 100. Accordingly, the liquid crystal molecules 255 of the second panel 200 and the liquid crystal molecules 155 of the first panel 100 have different twisted alignment directions. For example, in a case where the liquid crystal layer 150 of the first panel 100 has a levorotatory chiral dopant, and the liquid crystal layer 250 of the second panel 200 has a dextroratory chiral dopant, the liquid crystal molecules 155 of the first panel 100 are twistedly aligned in a counterclockwise direction, and the liquid crystal molecules 255 of the second panel 200 are twistedly aligned in a clockwise direction.

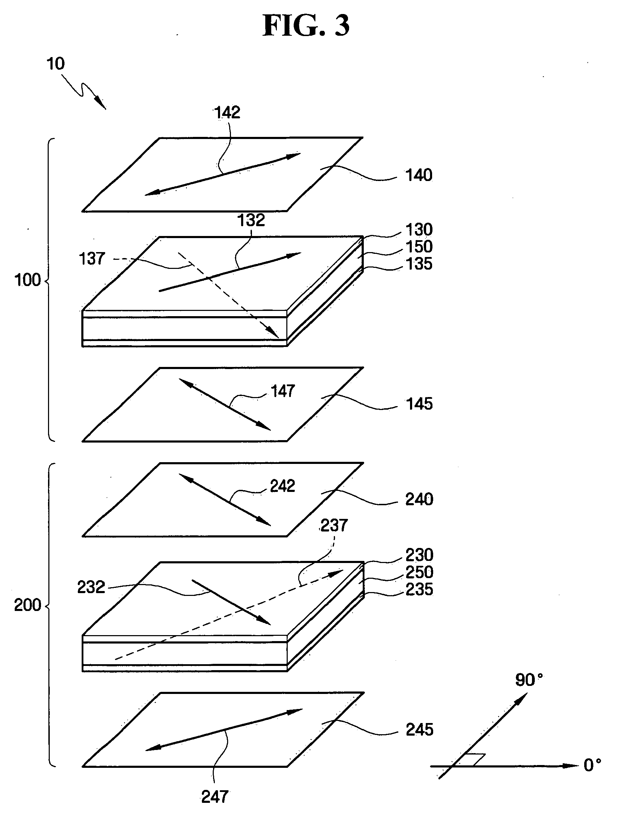

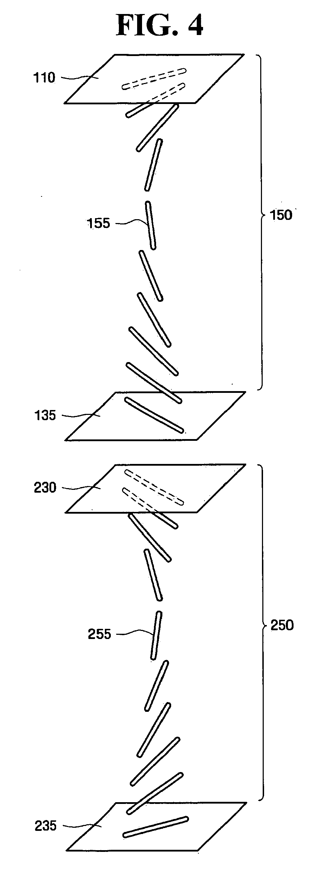

Hereinafter, a transmissive axis direction of the polarizing plate and a rubbing direction of the alignment film will be described with reference to FIGS. 2 to 4. FIG. 3 is an exploded perspective view illustrating a three-dimensional image display device of FIG. 2, and FIG. 4 is a diagram illustrating movement of liquid crystal molecules in each panel of FIG. 3. For convenience of description, according to reference values of angles to be described below, a 3' o'clock direction is set as a zero degree and a counterclockwise direction is set to a forward direction, in terms of a direction viewed by users.

Referring to FIGS. 2 and 3, in the case of the first panel 100 that operates in a TN mode, a rubbing direction 137 of the alignment film 135 may be orthogonal to a rubbing direction 132 of the alignment film 130. For example, the rubbing direction 137 of the alignment film 135 may be approximately -45°, and the rubbing direction of the alignment film 130 may be approximately 45°. In this case, the first panel 100 may have an optimal viewing angle characteristic in a 6' clock direction (a direction of -90°).

Further, in the alignment film 130 and the polarizing plate 140 that form the upper substrate 102, the rubbing direction 132 of the alignment film 130 is substantially parallel to the polarizing axis 142 of the polarizing plate 140. For example, the polarizing axis 142 of the polarizing plate 140 is approximately 45° or -135°. In the alignment film 135 and the polarizing plate 145 that form the lower substrate 104, the rubbing direction 137 of the alignment film 135 is substantially parallel to the polarizing axis 147 of the polarizing plate 145. For example, the rubbing direction 132 of the alignment film 230 forms an angle of approximately 135° or -45°.

The rubbing direction 232 of the alignment film 230 of the second panel 200 and the rubbing direction 137 of the alignment film 135 of the first panel 100 may be adjusted to align with each other. For example, the rubbing direction 232 of the alignment film 230 may be approximately -45°. As such, the rubbing direction 232 is adjusted to align with the rubbing direction 137, light loss is minimized when linearly polarized light passing through the second panel 200 is incident on the first panel 100, thereby obtaining higher transmittance.

Further, in the case of the second panel 200 that operates in a TN mode, the rubbing direction 237 of the alignment film 235 may be orthogonal to the rubbing direction 232 of the alignment film 230. For example, the rubbing direction 237 of the alignment film 235 forms an angle of approximately 45°. In some cases, the rubbing direction 237 of the alignment film 235 may form an angle of -135° such that it is orthogonal to the rubbing direction 232 of the alignment film 230. At this time, the liquid crystal layer 150 and the liquid crystal layer 250 each have a chiral dopant with the same polarity.

Further, in the alignment film 230 and the polarizing plate 240 that form the upper substrate 202, the rubbing direction 232 of the alignment film 230 is substantially parallel to the polarizing axis 242 of the polarizing plate 240. For example, the polarizing axis 242 of the polarizing plate 240 forms an angle of approximately 135° or -45°. In the alignment film 235 and the polarizing plate 245 that form the lower substrate 204, the rubbing direction 237 of the alignment film 235 is substantially parallel to the polarizing axis 247 of the polarizing plate 245. That is, the polarizing axis 247 of the polarizing plate 245 forms an angle of 45° or -135°.

When observing an initial alignment state of the liquid crystal molecules 155 that are included in the first panel 100, the liquid crystal molecules 155 are aligned with the rubbing direction 137 in the alignment film 135 of the lower substrate 104, and are aligned with the rubbing direction 132 in the alignment film 130 of the upper substrate 102. These liquid crystal molecules 155 are spirally twisted at predetermined pitches, and in order to form these pitches, a levorotatory chiral dopant may be added in the liquid crystal layer 150 with a concentration in a range of 0.01 to 8.0 wt%. Therefore, the liquid crystal molecules 155 are twistedly aligned in a counterclockwise direction.

In contrast, when observing an initial alignment state of the liquid crystal molecules 255 that are included in the second panel 200, the liquid crystal molecules 255 are aligned with a rubbing direction 237 in the alignment film 235 of the lower substrate 204, and are aligned with the rubbing direction 232 in the alignment film 230 of the upper substrate 202. These liquid crystal molecules 255 are spirally twisted at predetermined pitches, and in order to form these pitches, a dextrorotatory chiral dopant may be added in the liquid crystal layer 250 with a concentration in a range of 0.01 to 8.0 wt%. Therefore, the liquid crystal molecules 255 are twistedly aligned in a clockwise direction.

Accordingly, the liquid crystal layer 150 of the first panel 100 and the liquid crystal layer 250 of the second panel 200 include chiral dopants whose polarities are inversed.

Referring to FIGS. 2 and 3, the rubbing direction 137 of the alignment film 135 and the rubbing direction 232 of the alignment film 230 are adjusted to align with each other. Accordingly, the polarizing axis 147 of the polarizing plate 145 and the polarizing axis 242 of the polarizing plate 240 are adjusted to align with each other, light leakage can be minimized when linearly polarized light passing through the second panel 200 is incident on the first panel 100. Therefore, high transmittance can be obtained in the three-dimensional image display device 10 according to the exemplary embodiment of the present invention.

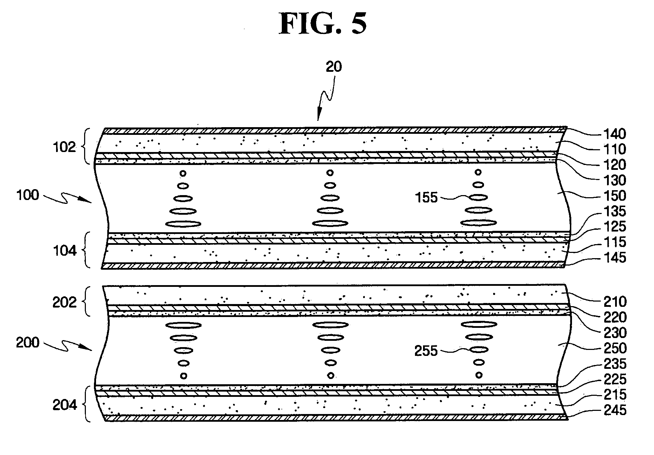

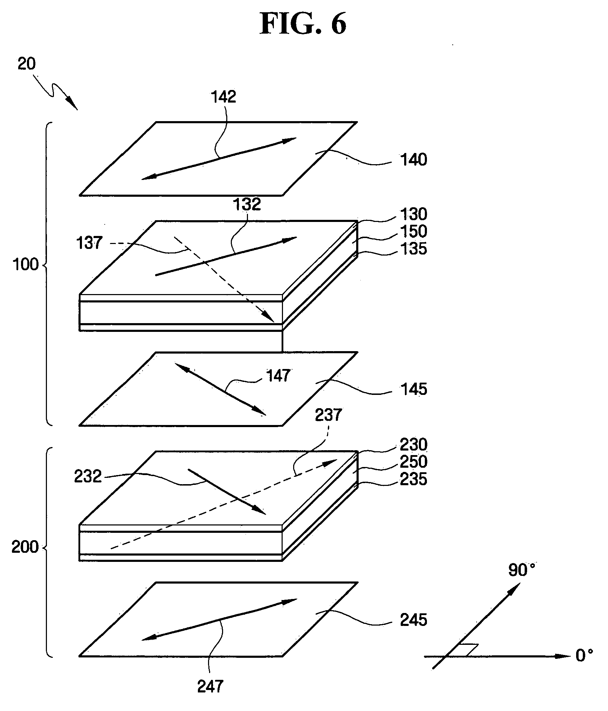

Hereinafter, a three-dimensional image display device according to another exemplary embodiment of the present invention will be described with reference to FIGS. 5 and 6. FIG. 5 is a cross-sectional view of a three-dimensional image display device according to another exemplary embodiment of the present invention, and FIG. 6 is an exploded perspective view of a three-dimensional image display device of FIG. 5. For convenience of description, members that have the same functions as the respective members in the drawings (FIGS. 1 to 4) of the above-described embodiment are denoted by the same reference numerals, and the description thereof will be omitted. The three-dimensional image display device according to this embodiment of the present invention is the same as that of the above-described embodiment, except for the following structure.

That is, as shown in FIGS. 5 and 6, a three-dimensional image display device 20 according to another exemplary embodiment of the present invention includes a first panel 100 and a second panel 200. In the first panel 100, a pair of polarizing plates 140 and 145 are formed on both sides thereof. In the second panel 200, a polarizing plate 245 is formed only on one side thereof that is adjacent to the first panel 100, and a polarizing plate is not formed on the other side thereof. In FIGS. 1 to 4, two polarizing plates having the same polarizing axis are disposed between the first panel 100 and the second panel 200. However, in this embodiment, even if only one polarizing plate is disposed between the first panel 100 and the second panel 200, it is still possible to obtain substantially the same function and effect as the above-described embodiment.

In this embodiment, the case of when the polarizing plate 145 is attached to the first panel 100 is exemplified, but the present invention is not limited thereto. For example, the polarizing plate 145 may be attached to the second panel 200.

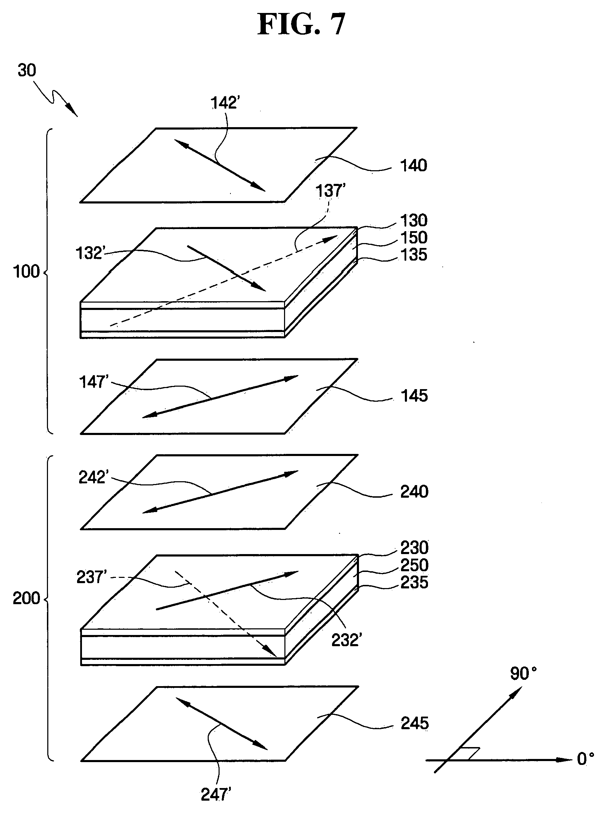

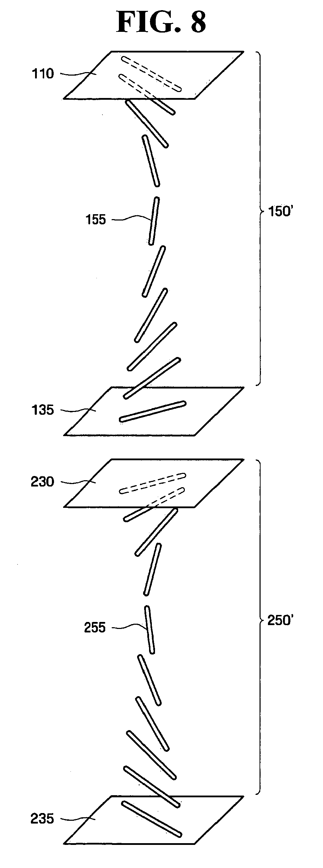

Hereinafter, a three-dimensional image display device according to still another exemplary embodiment of the present invention will be described with reference to FIGS. 7 and 8. FIG. 7 is an exploded perspective view of a three-dimensional image display device according to still another exemplary embodiment of the present invention, and FIG. 8 is a diagram illustrating movement of liquid crystal molecules in each panel of FIG. 7. For convenience of description, members that have the same functions as the respective members in the drawings (FIGS. 1 to 4) of the above-described embodiment are denoted by the same reference numerals, and the description thereof will be omitted. The three-dimensional image display device according to this embodiment of the present invention is the same as that of the above-described embodiment, except for the following structure.

Referring to FIG. 7, in the case of the second panel 200 that operates in a TN mode, a rubbing direction 237' of the alignment film 235 and a rubbing direction 232' of the alignment film 230 may be orthogonal to each other. For example, the rubbing direction 237' of the alignment film 235 is approximately -45°, and the rubbing direction 232' of the alignment film 230 is approximately 45°. In this case, the second panel 200 may have an optimal viewing angle characteristic in a 6' clock direction (a direction of -90°).

Further, in the alignment film 230 and the polarizing plate 240, the rubbing direction 232' of the alignment film 230 is substantially parallel to the polarizing axis 242' of the polarizing plate 240. For example, the polarizing axis 242' of the polarizing plate 240 is approximately 45° or -135°. And, in the alignment film 235 and the polarizing plate 245, the rubbing direction 237' of the alignment film 235 is substantially parallel to the polarizing axis 247' of the polarizing plate 245. For example, the polarizing axis 247' of the polarizing plate 245 is approximately 135° or -45°.

In the case of the first panel 100, the rubbing direction 137' of the alignment film 135 may align with the rubbing direction 232' of the alignment film 230 in the second panel 200. For example, the rubbing direction 137' of the alignment film 135 forms an angle of approximately 45°. As such, the rubbing direction 137' of the alignment film 135 of the first panel 100 and the rubbing direction 232' of the alignment film 230 of the second panel 200 are adjusted to align with each other, light loss is minimized when linearly polarized light passing through the second panel 200 is incident on the first panel 100, thereby obtaining higher transmittance.

Further, in the case of the first panel 100 that operates in a TN mode, the rubbing direction 132' of the alignment film 130 may be orthogonal to the rubbing direction 137' of the alignment film 135. For example, the rubbing direction 132' of the alignment film 130 forms an angle of approximately 45°. In some cases, the rubbing direction 132' of the alignment film 130 may form an angle of 135° such that it is orthogonal to the rubbing direction 137' of the alignment film 135. At this time, the liquid crystal layer 150 and the liquid crystal layer 250 each has a chiral dopant with the same polarity.

Further, in the alignment film 130 and the polarizing plate 140, the rubbing direction 132' of the alignment film 130 is substantially parallel to the polarizing axis 142' of the polarizing plate 140. For example, the polarizing axis 142' of the polarizing plate 140 forms an angle of approximately 135° or -45°. In the alignment film 135 and the polarizing plate 145, the rubbing direction 137' of the alignment film 135 is substantially parallel to the polarizing axis 147' of the polarizing plate 145. That is, the polarizing axis 147' of the polarizing plate 145 forms an angle of 45° or -135°.

When observing an initial alignment state of the liquid crystal molecules 155 that are included in the first panel 100 while referring to FIGS. 7 and 8, the liquid crystal molecules 155 are aligned with the rubbing direction 137' in the alignment film 135, and are aligned with the rubbing direction 132' in the alignment film 130. These liquid crystal molecules 155 are spirally twisted at predetermined pitches, and in order to form these pitches, a dextroratory chiral dopant may be added in the liquid crystal layer 150' with a concentration in a range of 0.01 to 8.0 wt%. Therefore, the liquid crystal molecules 155 are twistedly aligned in a clockwise direction.

In contrast, when observing an initial alignment state of the liquid crystal molecules 255 that are included in the second panel 200, the liquid crystal molecules 255 are aligned with a rubbing direction 237' in the alignment film 235, and are aligned with the rubbing direction 232' in the alignment film 230. These liquid crystal molecules 255 are spirally twisted at predetermined pitches, and in order to form these pitches, a levorotatory chiral dopant may be added in the liquid crystal layer 250' with a concentration in a range of 0.01 to 8.0 wt%. Therefore, the liquid crystal molecules 255 are twistedly aligned in a counterclockwise direction.

Accordingly, the liquid crystal layer 150' of the first panel 100 and the liquid crystal layer 250' of the second panel 200 include chiral dopants whose polarities are inversed.

As such, the rubbing direction 137' of the alignment film 135 and the rubbing direction 232' of the alignment film 230 are adjusted to align with each other, and the polarizing axis 147' of the polarizing plate 145 and the polarizing axis 242' of the polarizing plate 240 are adjusted to align with each other. Accordingly, light loss can be minimized when linearly polarized light passing through the second panel 200 is incident on the first panel 100, thereby obtaining higher transmittance. Although not shown in this embodiment, only one polarizing plate is disposed between the first panel 100 and the second panel 200, which can obtain substantially the same function and effect.

As described above, in the three-dimensional image display device according to the embodiments of the present invention, high transmittance can be produced even when a plurality of panels overlap each other.

Although the present disclosure has been described in connection with the exemplary embodiments of the present invention with reference to the accompanying drawings, it will be apparent to those skilled in the art that various modifications and changes may be made thereto without departing from the scope and spirit of the present invention. Therefore, it should be understood that the above embodiments are not limitative, but illustrative in all aspects.

## Claims

1. A display device for three-dimensional images, the display device comprising:
a first panel including first and second substrates where first and second alignment films are formed, respectively, and a first liquid crystal layer interposed between the first and second substrates;
a second panel including third and fourth substrates where third and fourth alignment films are formed, respectively, and a second liquid crystal layer interposed between the third and fourth substrates, and disposed to overlap the first panel;
first and second polarizing plates disposed at the outsides of the first and second panels, respectively, and
a third polarizing plate disposed between the first and second panels,
wherein a polarizing axis of the third polarizing plate substantially aligns with rubbing directions of the second and third alignment films that are disposed adjacent to the third polarizing plate.

2. The display device of claim 1, wherein the first and second liquid crystal layers have chiral dopants that have different polarities, respectively.

3. The display device of claim 2, wherein liquid crystal molecules of the first and second liquid crystal layers are twistedly aligned in different directions.

4. The display device of claim 1, wherein, when an electric field is not applied, major axes of liquid crystal molecules in the first and second liquid crystal layers are parallel to the first and third substrates, respectively.

5. The display device of claim 4, wherein the liquid crystal molecules of the first and second liquid crystal layers have positive dielectric anisotropy.

6. The display device of claim 1, wherein rubbing directions of the first and second alignment films are orthogonal to each other.

7. The display device of claim 1, wherein rubbing directions of the third and fourth alignment films are orthogonal to each other.

8. The display device of claim 1, wherein polarizing axes of the first and second polarizing plates align with each other.

9. The display device of claim 8, wherein the polarizing axes of the first and second polarizing plates are orthogonal to a polarizing axis of the third polarizing plate.

10. The display device of claim 1, wherein a color filter is formed on either the first panel or the second panel.

11. The display device of claim 1, wherein the third polarizing plate is attached to each of the first panel and the second panel.

12. A display device for three-dimensional images, the display device comprising:
a first panel including first and second substrates and a first liquid crystal layer interposed between the first and second substrates;
a second panel including third and fourth substrates and a second liquid crystal layer interposed between the third and fourth substrates, and disposed to overlap the first panel; and
first and second polarizing plates disposed at the outsides of the first and second panels, respectively,
wherein the first and the second crystal layers have chiral dopants with different polarities, respectively, and
polarizing axes of the first and second polarizing plates align with each other.

13. The display device of claim 12, further comprising:
a third polarizing plate disposed between the first and second panels; and
first, second, third, and fourth alignment films formed on the first, second, third, and fourth substrates, respectively,
wherein a polarizing axis of the third polarizing plate substantially aligns with rubbing directions of the second and third alignment films that are disposed adjacent to the third polarizing plate.

14. The display device of claim 13, wherein rubbing directions of the first and second alignment films are orthogonal to each other.

15. The display device of claim 13, wherein rubbing directions of the third and fourth alignment films are orthogonal to each other.

16. The display device of claim 13, wherein polarizing axes of the first and second polarizing plates are orthogonal to a polarizing axis of the third polarizing plate.

17. The display device of claim 13, wherein the third polarizing plate is attached to each of the first and second panels.

18. The display device of claim 12, wherein liquid crystal molecules of the first and second liquid crystal layers are twistedly aligned in different directions.

19. The display device of claim 12, wherein, when an electric field is not applied, major axes of liquid crystal molecules in the first and second liquid crystal layers are parallel to the first and third substrates, respectively.

20. The display device of claim 19, wherein the liquid crystal molecules of the first and second liquid crystal layers have positive dielectric anisotropy.

21. The display device of claim 12, wherein a color filter is formed on either the first panel or the second panel.
